# EUROPEAN PATENT SPECIFICATION

(11) **EP 2 430 819 B1**
(45) Date of publication and mention of the grant of the patent: **27.03.2019**
(21) Application number: 10719409.4
(22) Date of filing: 30.04.2010
(51) Int. Cl.: H04L 29/12

(54) **A METHOD OF ASSIGNING A NETWORK ADDRESS FOR COMMUNICATING IN A SEGMENTED NETWORK**
VERFAHREN ZUM VERGEBEN EINER NETZWERKADRESSE ZUR KOMMUNIKATION IN EINEM SEGMENTIERTEN NETZWERK
PROCÉDÉ D'ATTRIBUTION D'UNE ADRESSE DE RÉSEAU DE FAÇON À COMMUNIQUER DANS UN RÉSEAU SEGMENTÉ

(30) Priority: 13.05.2009 EP 09305426
(43) Date of publication of application: 21.03.2012
(73) Proprietor: Signify Holding B.V., 5656 AE Eindhoven (NL)
(72) Inventor: LELKENS, Armand, NL-5656 AE Eindhoven (NL); ERDMANN, Bozena, NL-5656 AE Eindhoven (NL)
(74) Representative: Verweij, Petronella Daniëlle
(86) International application number: PCT/IB2010/051899
(87) International publication number: WO 2010/131149

(56) References cited:
- US-A1- 2007 110 058
- ZIGBEE ALLIANCE: "ZigBee Specification 2007 - Chapter 3.6" INTERNET CITATION 17 January 2008 (2008-01-17), pages 347-417, XP002542076 Retrieved from the Internet: URL:http://www.zigbee.org [retrieved on 2009-08-19]

## Description

### FIELD OF THE INVENTION

The present invention relates to a method for communicating in a network, comprising a plurality of nodes, and such nodes. This invention is more especially related to ad hoc networks and that may comprise a plurality of sub-networks interconnected to each other by a backbone.

This invention is, for example, relevant for Zigbee networks.

### BACKGROUND OF THE INVENTION

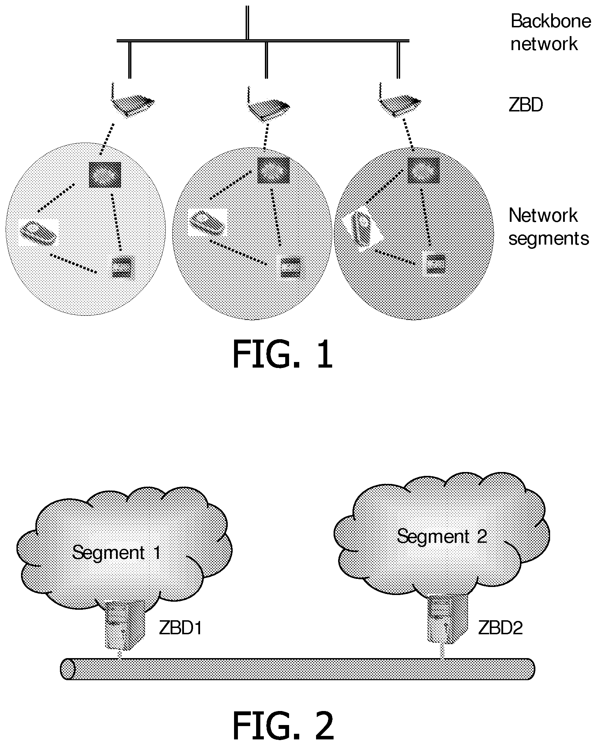

Ad hoc networks, like a ZigBee network, are often limited with large scale network deployment where hundreds and thousands of sensors and controllers in commercial buildings need to be fully connected. The root cause of the scalability problem in large-scale networks, like a large scale Zigbee network, is the so-called "broadcast storm" problem where ongoing broadcasting interferes with parallel unicast packet traversals. In order to reduce the consequence of a broadcast storm, instead of connecting all devices using one single ZigBee network, it is proposed to use a "Scalable Hybrid and Integrated Network" concept where a single logical ZigBee network is divided physically into a number of ZigBee segments that are connected by some high bandwidth backbone technologies, such as Ethernet or Wi-Fi. This is illustrated with Figure 1.

In the ZigBee bridging specification, a ZigBee Bridging Device (ZBDs) is an entity that connect physically separated ZigBee segments into one logical ZigBee networks transparently. To achieve transparency with regard to backbone technologies, a ZBD encapsulates every ZigBee packet it receives in an IP packet and tunnel it towards a destination ZBD where the encapsulated ZigBee packet is unpacked without modifications.

However, the ZigBee bridging devices do not provide full support for scalability. Indeed, in a bridged ZigBee network, logically all ZigBee network segments or sub-networks are considered as one ZigBee network where every node share the same ZigBee PAN network ID and share the same ZigBee network address space. This is achieved by transparent bridging done at ZBDs. Transparent bridging also implies that rebroadcasting will take place in every other segments for a broadcast originated from one segment. While this is necessary for data broadcasting that needs to reach every ZigBee devices on a network, this is unnecessary for some of the control packets. For example, when a routing discovery packet for a particular node is sent, only the segment that contains the particular node need to be flooded with the broadcasting of the packet. Broadcasting to other segments is unnecessary and will not yield any useful result.

In a large network, overhead in maintaining network connectivity is large. This leads to large number of control packets being transmitted in broadcast mode. These include among other things Device Announcement and Route Discovery commands. Therefore suppressing unnecessary flooding of control packets in every segment becomes necessary to reach full scalability. Such flooding is especially present in case of address collision, i.e. when a new address selected by a node for being identified in the network is really in use by another node.

Document "ZigBee Specification 2007" - Chapter 3.6, pages 347-417, XP-002542076 of 17 January 2008 sponsored by Zigbee Alliance describes the ZigBee protocol specification.

US 2007/110058A1 describes an internet Protocol address allocation method using a base station and a mobile terminal. The mobile terminal includes a radio frequency (RF) unit for transmitting a signal requesting allocation of an IP address for access to Internet to a base station and receiving information about an identifier of the base station and information about an IP address range allocated to the base station from the base station, and a controller for controlling the RF unit to transmit the IP address allocation request signal to the base station, selecting an IP address using the identifier information and IP address range information received through the RF unit, and controlling the RF unit to send a signal requesting use of the selected IP address to an IP address server through the base station. An IP address is acquired using a base station so that an IP address allocation time can be shortened. Therefore, it is possible to rapidly provide a mobile Internet service to the user and to reduce transmission and reception of unnecessary messages on a network, resulting in an improvement in network efficiency.

### SUMMARY OF THE INVENTION

It is an object of the invention to propose a method for reducing the signalling required to solve address collision.

It is another object of the invention to propose a network where the address collision is solved with minimal signalling.

In accordance with a first aspect of the invention, a method is proposed for assigning a network address to a first node in a network comprising a plurality of second nodes, the network being subdivided in a plurality of sub-networks interconnected by means of at least one backbone, wherein each sub-network is coupled to the backbone by means of at least one dedicated control device, wherein the first node and a first dedicated control device belong to a first sub-network, the method comprising the steps of:
(a) assigning a stochastic address to the first node,
(b) the first node transmitting an announcement message to the first dedicated control device,
(c) the first dedicated control device checking whether the assigned network address is available, step (c) comprising:
   (c1) the first control device checking in a control device list of already in use addresses whether the assigned network address is included in this control device list, and
   (c2) upon failing to find the assigned network address in the control device list, submitting the network address to other control devices connected to the backbone, and
(d) upon detecting that the assigned network address is not available, the first dedicated control device transmitting a message requesting the change of the assigned address.
In accordance with a second aspect of the invention, it is proposed a control device for coupling a sub-network to a backbone, the sub-network being one of a plurality of sub-networks into which a network is subdivided and the backbone configured to interconnect the plurality of sub-networks, the control device configured to
- receive an announcement message from a first node of the sub-network, the first node being assigned a stochastic address,
- check whether the assigned network address is available by checking in a control device list of already in use addresses whether the assigned network address is included in this control device list, and upon failing to find the assigned network address in the control device list, submitting the network address to other control devices connected to the backbone, and
- upon detecting that the assigned network address is not available, transmit a message requesting the change of the assigned address.

As a consequence, this process enables a short and efficient selection of new address in case of conflicts. It also permits to avoid the transmission of a plurality of new address attempts. Indeed, when the network comprises a large number of nodes, the probability of selecting an already used address is high, and this new method enables a quick resolution of address conflicts with low overhead.

These and other aspects of the invention will be apparent from and will be elucidated with reference to the embodiments described hereinafter.

### BRIEF DESCRIPTION OF THE DRAWINGS

The present invention will now be described in more detail, by way of example, with reference to the accompanying drawings, wherein:
- Fig. 1 already described is a block diagram of a segmented network.
- Fig. 2 is a block diagram of a network in accordance with an embodiment of the invention.
- Fig. 3 is a block diagram of a network in accordance with an embodiment of the invention.

### DETAILED DESCRIPTION OF THE INVENTION

In a ZigBee network stochastic addressing is used where each node gets a random network address within the 16 bit wide address space. After a short check by a parent, whether the address is in conflict with other 16-bit addresses known to the parent (neighbours, bound and infrastructure devices), the node announces the usage of this address by means of a Device_annce broadcast. If any device in the network notices a conflict, i.e. two nodes using the same address, it is reported via broadcast network status message, and subsequently both conflicting nodes get a new random address and broadcast it.

In a large ZigBee network the random address selection can give rise to repetitive conflicts and subsequent transmission of multiple network wide broadcasts. Also, nodes that once established a unique network address can later on be forced to select a new one (if another node happens to select that same address).

The ZigBee alliance foresees two methods to segment a large network into several smaller ones. One is the ZigBee gateway specification, which is not yet ready; and gateway usage will result in independent segments, making inter-segment communication non-transparent or more complicated. The other segmentation of the large network with connections to a backbone via bridges (ZBDs - ZigBee Bridging Devices or segment control device) but these ZBDs are completely transparent and simply pass on all broadcast messages to the backbone and to other segments.

The issue is to improve the addressing by finding a way to limit the scope of the address conflict detection and resolution broadcast to only those part(s) of the network that are really needed.

In accordance with an embodiment of the invention illustrated on Figure 2, each node assigns itself (in communication with its parent) a stochastic address where the address conflicts are handled per segment and filtered out by this segment's ZBD, without the need for address conflict detection and resolution broadcasting in the entire network. To this end, the ZBDs keep a list of the addresses already in use and can directly respond to Device_annce messages from devices to avoid duplicate usage of addresses. Moreover, using this list of local addresses they can immediately recognise whether messages on the backbone are meant for devices in their segment and then forward them (or, if they are not meant for its segment, ignore them). For each device in the list, there is also the address of the ZBD via which it can be reached with the lowest cost.

In the simplest case, groups of nodes that are within each others radio range share exactly one ZBD to connect to the (exactly one) backbone. It can happen that radio ranges overlap and thus a group of nodes have more than one connecting ZBD to the backbone (also called 'multi-homed'): Note, that if the radio ranges of the segments overlap, but the segments use a different channel, each node belongs to only one segment and the segments logically do not overlap.

In order to detect such topologies each ZBD shall send out a many-to-one route request to itself (on the ZigBee side). A ZBD receiving such a request for a different node knows that the originator of the request is also a bridging device for the same segment and thus, that the segment is multi-homed.

In order to distinguish between Device_annce messages with equal short addresses sent by the same device in one segment from messages sent by different devices (in the same or another segment) the ZBD shall also keep track of the long MAC addresses. Therefore the information to be stored in the list per node is:

| | |
|---|---|
| MAC address | 64-bit long address |
| NWK address | 16-bit short address |
| ClosestZBD | NWK address of the ZBD it has the lowest-cost path to this node : in a single-home segment that's the address of this segment's bridge, and in multi-homed segments, that's the address of the bridge that has the shortest in-segment route to this node |
| Cost | path cost to the node |

In accordance with this embodiment, the procedure to assign unique addresses to the nodes is as follows:
o A new node that joins the network, is assigned a stochastic address by its parent, and broadcasts the Device_annce message (SOTA).
o A ZBD that receives this broadcast Device_annce message from the ZigBee side looks up the MAC address in its list of used addresses.
   i. If it is already in the list, and
      if the NWK matches, the ZBD ignores the message;
      elseif the NWK is different, check this NWK address for conflict, i.e. whether the new NWK address is already in the list, used by a different node with a different 64-bit address.
      If it isn't, update the NWK address for this MAC address and broadcasts the message over the backbone to the other ZBDs.
      else send a network status command OxOd to the originator to forbid this node choosing that NWK address.
   ii. If it is not already in the list, but the NWK is, it sends a network status command OxOd to the originator to forbid this node choosing that NWK address. The Device_annce is not forwarded, so the other segments will not notice. The ZBD adds the MAC address to the list, with 16-bit address set to Oxffff (unspecified).
   iii. If it is not already in the list and neither is the NWK address, the ZBD adds both to the list and broadcasts the message over the backbone to the other ZBDs.
o A ZBD that receives a Device_annce via the backbone checks the MAC address in its list
   i. If the MAC-NWK address combination it is already in the list, it ignores the message
   ii. If it is not already in the list, but the NWKaddress is (so it is for a different MAC address, the ZBD sends a broadcast? network status command OxOd on the backbone to the sending ZBD. The Device_annce is not forwarded into the segments, so the devices in the segment will not notice
   iii. If it is not already in the list, and neither is the NWKaddress, the ZBD adds it, together with the ZBD from which the message was received as closestZBD.
o A ZBD that receives a network status command OxOd on the backbone, checks the address in its list
   i. If the address occurs in the list; it sets the NWKaddress to 0xffff and - if the ZBD's own address is set in the closestZBD field - it forwards the message to this address [it can do this, because the conflict is EXTERNAL, i.e. between different segments, i.e. the address is still unique within the subnet]
   ii. If the address is not in the list, the ZBD ignores the message In a variant of the above embodiment, it has been noticed that
o For big networks the list of all used address in the network may grow too large. In an optimization each ZBD only stores addresses in use in their own segment, thus saving on storage space.In multi-homed segments the addresses occur in both (all) ZBDs to which the segment is connected.and those ZBDs will forward traffic.
   The downside is that
   i. a sending ZBD cannot decide directly to which ZBD a Device_annc message has to be forwarded but has to broadcast it on the backbone always so that the correct ZBD can decide to react on it.
   ii. after the ZBD has accepted a new address from a node in its segment, it may still get the address conflict message from another ZBD and has to revoke the address after all (this might also happen in the above case if the Device_annc messages cross each other)
o The Device_annce message is extended with a 'aggregated cost' field which is incremented with the link cost at each hop, so that the receiving ZBD is informed about the total cost to reach this node. This field is also added to the list entries.

With this optimization, if a ZBD receives a Device_annce message from its segment and find the address in its list, it first checks whether the cost is lower than the previous cost. If so, it updates the record of the address with the new cost and if the closestZBD is different from the current one, it sends the Device_annce message to the other ZBDs to inform them about the new (cheaper) path to that node.

If both optimisations are combined ZBDs can use the cost information (of the second optimisation).to decide which of the ZBDs in a multi-homed segment have the lowest path cost to the node; the other ZBDs can delete this node form their list (according to the first optimisation).

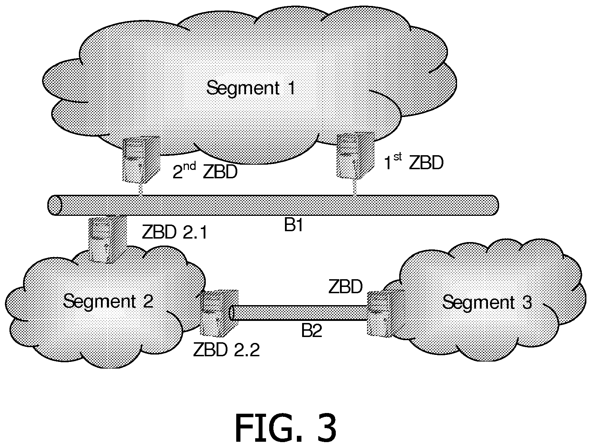

In a variant of this embodiment illustrated on figure 3, it can happen that the segments are not connected via one backbone, but via a number of (fragmented) backbones. This would imply, that at least one segment is multi-homed, with at least two ZBDs connected to different backbone fragments, as depicted below.

In this situation a many-to-one route request from ZBD2.1 will be seen by ZBD2.2 and vice versa. Because these ZBDs cannot contact the other via their backbone, they know that they are on different backbones. If they find themselves in such a situation they will forward Device_annce and Network Status OxOd messages received from their backbone also as (possibly multiple) unicast to the ZBDs from which they have seen a many-to-one route request. In this way, the lists in all ZBDs are synchronised. Similarly, if the shorter list (only local nodes) optimization is used, all the other ZBDs will get the Device_annce message (and respond if the address is already in use in their segment) and the Network Status OxOd messages.

Another embodiment of the invention is based on the recognition that in the standard ZigBee specification [r17], in order to avoid reduce the probability of address conflicts, a new stochastic address to be used by a joining device (or by a device that has to change address as a result of a collision) is checked for conflict by the parent of the joiner. This embodiment proposes to extend this procedure, so that this check not only is based on the addresses that occur in the parent's NIB. Also the parent queries the bridge(s) in its segment. If the address is unique, the bridge just approves it, by sending Network Status command with the status of 0x08 (meaning Target Address unallocated). Otherwise, if the address is in conflict; the bridge sends back a free, unique address. This address is taken from an unique address pool, local to the bridge. If the bridge runs out of address, it claims another pool of addresses in cooperation with other bridges.
Some notes on the network status command:
Network status address verification 0x0e unicast to bridge: to verify that a certain destination NWK address belongs to some MAC address, not to check whether it is free.
Network Status command Target Adress unallocated 0x08
Network Address Update 0x10
This embodiment to avoid address conflicts by issuing addresses may comprise
- Introduce new DHCP-like request from parent to bridge
- Use device_annce unicast to bridge
- Device address reservation protocol

In addition, in a variant of this invention, the protocol is specified for the ZBD to align the address pools between themselves automatically, without the need of manual pre-configuration by the user.

Upon joining the network, the new ZBD gets a pool of PoolSize addresses. Pool size could be half of an average segment size, e.g. 50 NWK addresses. The address pool could be assigned to the bridge by the ZC/TC, upon joining the network, i.e. after it sends Device_annce (if its bridge capabilities are indicated there).
Alternatively, the new ZBD discovers all other ZBDs and the address pools used by them, and then chooses a unique pool.

The ZBD can store the pool of addresses assigned to it directly in its NIB AddressMap, with the NWK address field containing the unique address, and the IEEE address field containing 0x0..000 for unspecified. The ZBD will overwrite the IEEE addresses, as it assigns them to the devices on its segment.

In addition, each parent could keep one free, unique address "on the stock", to have it for the joining child.

The invention and its embodiments are related to Scalable Hybrid and Integrated Networks for Lighting Control. Lighting control is active in controls in large commercial building. Currently, control networks are wired. Lighting control intends to ship wireless control products in the near future because of the no-wire advantages of wireless networks. ZigBee is the choice for wireless connectivity; however, ZigBee has been reported of limited support for large-scale networks.

Application of the embodiments of the invention can go maturely beyond lighting control to areas/products where large scale wireless sensor networks are desired.

In the present specification and claims the word "a" or "an" preceding an element does not exclude the presence of a plurality of such elements. Further, the word "comprising" does not exclude the presence of other elements or steps than those listed.

The inclusion of reference signs in parentheses in the claims is intended to aid understanding and is not intended to be limiting.

From reading the present disclosure, other modifications will be apparent to persons skilled in the art. Such modifications may involve other features which are already known in the art of radio communication.

## Claims

1. A method for assigning a network address to a first node in a network comprising a plurality of second nodes, the network being subdivided in a plurality of sub-networks interconnected by means of at least one backbone, wherein each sub-network is coupled to the backbone by means of at least one dedicated control device, wherein the first node and a first dedicated control device belong to a first sub-network, the method comprising the steps of:
(a) assigning a stochastic address to the first node,
(b) the first node transmitting an announcement message to the first dedicated control device,
(c) the first dedicated control device checking whether the assigned network address is available, step (c) comprising:
(c1) the first control device checking in a control device list of already in use addresses whether the assigned network address is included in this control device list, and
(c2) upon failing to find the assigned network address in the control device list, submitting the network address to other control devices connected to the backbone, and
(d) upon detecting that the assigned network address is not available, the first dedicated control device transmitting a message requesting the change of the assigned address.

2. The method of claim 1, wherein step (a) comprises a parent node of the first node assigning the stochastic address to the first node, wherein the stochastic address is different from a list of already in use addresses stored by the parent node.

3. The method of claim 2, wherein, prior to step (a), the first node submits a proposed network address, and wherein the parent node assigns the proposed network address as the assigned network address if the proposed network address is not included in the list of already in use addresses.

4. The method of any of the preceding claims, wherein at step (b) the first node transmits the announcement message to the first control device by broadcasting the announcement message to all neighboring nodes.

5. The method of claim 4, wherein step (c) further comprises (c3) the other control devices checking whether the assigned network address is included in their own control device list of already in use addresses.

6. The method of any of the preceding claims, wherein the first control device further comprises a list of available network addresses, and wherein step (d) further comprises
(d1) the first control device selecting an available network address from the list of available network addresses, and
(d2) transmitting the selected available network address with the message requesting the change of the assigned address.

7. The method of claim 6, further comprising the step of (e) the first node using the selected network address and broadcasting an announcement message to its neighbor nodes, said announcement message including the selected network address.

8. The method of claim 6 or 7, wherein each control device comprises respectively a list of available addresses.

9. The method of any of claims 6 to 8, wherein step (d) further comprises (d3) the first control device checking whether the number of remaining available network addresses in the list of available network addresses is below a threshold, and requests to the network a new list of available addresses.

10. A control device for coupling a sub-network to a backbone, the sub-network being one of a plurality of sub-networks into which a network is subdivided and the backbone configured to interconnect the plurality of sub-networks, the control device configured to
- receive an announcement message from a first node of the sub-network, the first node being assigned a stochastic address,
- check whether the assigned network address is available by checking in a control device list of already in use addresses whether the assigned network address is included in this control device list, and upon failing to find the assigned network address in the control device list, submitting the network address to other control devices connected to the backbone, and
- upon detecting that the assigned network address is not available, transmit a message requesting the change of the assigned address.

11. A sub-network comprising a plurality of nodes and at least one control device as claimed in claim 10.

12. A network comprising a plurality of sub-networks as claimed in claim 11, interconnected by means of a backbone.

## Patentansprüche

1. Verfahren zum Vergeben einer Netzwerkadresse an einen ersten Knoten in einem Netzwerk, umfassend eine Vielzahl von zweiten Knoten, wobei das Netzwerk in eine Vielzahl von Teilnetzwerken unterteilt ist, die durch zumindest ein Rückgrat miteinander verbunden sind, wobei jedes Teilnetzwerk an das Rückgrat durch zumindest eine dedizierte Steuervorrichtung gekoppelt ist, wobei der erste Knoten und eine erste dedizierte Steuervorrichtung zu einem ersten Teilnetzwerk gehören, das Verfahren umfassend die Schritte:
(a) Vergeben einer stochastischen Adresse an den ersten Knoten,
(b) Senden, durch den ersten Knoten, einer Ankündigungsnachricht an die erste dedizierte Steuervorrichtung,
(c) Prüfen, durch die erste dedizierte Steuervorrichtung, ob die vergebene Netzwerkadresse verfügbar ist, Schritt (c) umfassend:
(c1) Prüfen, durch die erste Steuervorrichtung, in einer Steuervorrichtungsliste von bereits in Verwendung befindlicher Adressen, ob die vergebene Netzwerkadresse in dieser Steuervorrichtungsliste enthalten ist, und
(c2) falls die vergebene Netzwerkadresse in der Steuervorrichtungsliste nicht gefunden wird, Vorlegen der Netzwerkadresse anderen Steuervorrichtungen, die mit dem Rückgrat verbunden sind, und
(d) beim Erfassen, dass die vergebene Netzwerkadresse nicht verfügbar ist, Senden, durch die erste dedizierte Steuervorrichtung, einer Nachricht, die die Änderung der vergebenen Adresse verlangt.

2. Verfahren nach Anspruch 1, wobei Schritt (a) umfasst, dass ein Elternknoten des ersten Knotens die stochastische Adresse an den ersten Knoten vergibt, wobei sich die stochastische Adresse von einer Liste bereits in Verwendung befindlicher Adressen unterscheidet, die im Elternknoten gespeichert ist.

3. Verfahren nach Anspruch 2, wobei, vor Schritt (a), der erste Knoten eine vorgeschlagene Netzwerkadresse vorlegt und wobei der Elternknoten die vorgeschlagene Netzwerkadresse als die vergebene Netzwerkadresse vergibt, falls die vorgeschlagene Netzwerkadresse nicht in der Liste bereits in Verwendung befindlicher Adressen enthalten ist.

4. Verfahren nach einem der vorstehenden Ansprüche, wobei in Schritt (b) der erste Knoten die Ankündigungsnachricht zur ersten Steuervorrichtung durch Rundfunken der Ankündigungsnachricht an alle Nachbarknoten sendet.

5. Verfahren nach Anspruch 4, wobei Schritt (c) weiter (c3) umfasst, wobei die anderen Steuervorrichtungen prüfen, ob die vergebene Netzwerkadresse in ihrer eigenen Steuervorrichtungsliste bereits in Verwendung befindlicher Adressen enthalten ist.

6. Verfahren nach einem der vorstehenden Ansprüche, wobei die erste Steuervorrichtung weiter eine Liste verfügbarer Netzwerkadressen umfasst und wobei Schritt (d) weiter umfasst
(d1) Auswählen, durch die erste Steuervorrichtung einer verfügbaren Netzwerkadresse aus der Liste verfügbarer Netzwerkadressen und
(d2) Senden der ausgewählten verfügbaren Netzwerkadresse mit der Nachricht, die eine Änderung der vergebenen Adresse verlangt.

7. Verfahren nach Anspruch 6, weiter umfassend den Schritt (e) in dem der erste Knoten die ausgewählte Netzwerkadresse verwendet und eine Ankündigungsnachricht zu seinen Nachbarknoten rundfunkt, wobei die Ankündigungsnachricht die ausgewählte Netzwerkadresse enthält.

8. Verfahren nach Anspruch 6 oder 7, wobei jede Steuervorrichtung jeweils eine Liste verfügbarer Adressen umfasst.

9. Verfahren nach einem der Ansprüche 6 bis 8, wobei Schritt (d) weiter (d3) umfasst, in dem die Steuervorrichtung prüft, ob die Anzahl verbleibender verfügbarer Netzwerkadressen in der Liste verfügbarer Netzwerkadressen unter einem Schwellenwert ist, und von dem Netzwerk eine neue Liste verfügbarer Adressen verlangt.

10. Steuervorrichtung zum Koppeln eines Teilnetzwerks an ein Rückgrat, wobei das Teilnetzwerk eines von mehreren Teilnetzwerken ist, in die ein Netzwerk unterteilt ist und das Rückgrat konfiguriert ist, die Vielzahl von Teilnetzwerken zu verbinden, wobei die Steuervorrichtung konfiguriert ist zum:
- Empfangen einer Ankündigungsnachricht von einem ersten Knoten des Teilnetzwerks, wobei an den ersten Knoten eine stochastische Adresse vergeben wurde,
- Prüfen, ob die vergebene Netzwerkadresse verfügbar ist, durch Prüfen in einer Steuervorrichtungsliste bereits in Verwendung befindlicher Adressen, ob die vergebene Netzwerkadresse in dieser Steuervorrichtungsliste enthalten ist, und falls die vergebene Netzwerkadresse in der Steuervorrichtungsliste nicht gefunden wird, Vorlegen der Netzwerkadresse anderen Steuervorrichtungen, die mit dem Rückgrat verbunden sind, und
- beim Erfassen, dass die vergebene Netzwerkadresse nicht verfügbar ist, Senden einer Nachricht, die die Änderung der vergebenen Adresse verlangt.

11. Teilnetzwerk, umfassend eine Vielzahl von Knoten und zumindest eine Steuervorrichtung, wie in Anspruch 10 beansprucht.

12. Netzwerk, umfassend eine Vielzahl von Teilnetzwerken, wie in Anspruch 11 beansprucht, die durch ein Rückgrat verbunden sind.

## Revendications

1. Procédé d'attribution d'une adresse de réseau à un premier noeud d'un réseau comprenant une pluralité de seconds noeuds, le réseau étant subdivisé en une pluralité de sous-réseaux interconnectés au moyen d'au moins une ossature, dans lequel chaque sous-réseau est couplé à l'ossature au moyen d'au moins un dispositif de commande dédié, dans lequel le premier noeud et un premier dispositif de commande dédié appartiennent à un premier sous-réseau, le procédé comprenant les étapes consistant à :
(a) attribuer une adresse stochastique au premier noeud,
(b) le premier noeud transmettant un message d'annonce au premier dispositif de commande dédié,
(c) le premier dispositif de commande dédié vérifiant si l'adresse de réseau attribuée est disponible, l'étape (c) comprenant :
(c1) le premier dispositif de commande qui vérifie dans une liste de dispositifs de commande d'adresses déjà utilisées si l'adresse de réseau attribuée est incluse dans cette liste de dispositifs de commande et,
(c2) lorsque l'on n'arrive pas à trouver l'adresse de réseau attribuée dans la liste de dispositifs de commande, la soumission de l'adresse de réseau à d'autres dispositifs de commande raccordés à l'ossature, et
(d) lorsque l'on détecte que l'adresse de réseau attribuée n'est pas disponible, le premier dispositif de commande dédié transmettant un message demandant le changement de l'adresse attribuée.

2. Procédé selon la revendication 1, dans lequel l'étape (a) comprend un noeud parent du premier noeud affectant l'adresse stochastique au premier noeud, dans lequel l'adresse stochastique est différente d'une liste d'adresses déjà utilisées stockées par le noeud parent.

3. Procédé selon la revendication 2, dans lequel, avant l'étape (a), le premier noeud soumet une adresse de réseau proposée et dans lequel le noeud parent attribue l'adresse de réseau proposée comme adresse de réseau attribuée si l'adresse de réseau proposée n'est pas incluse dans la liste d'adresses déjà utilisées.

4. Procédé selon l'une quelconque des revendications précédentes, dans lequel, à l'étape (b), le premier noeud transmet le message d'annonce au premier dispositif de commande en diffusant le message d'annonce à tous les noeuds du voisinage.

5. Procédé selon la revendication 4, dans lequel l'étape (c) comprend en outre (c3) les autres dispositifs de commande qui vérifient si l'adresse de réseau attribuée est incluse dans leur propre liste de dispositif de commande d'adresses déjà utilisées.

6. Procédé selon l'une quelconque des revendications précédentes, dans lequel le premier dispositif de commande comprend en outre une liste d'adresses de réseaux disponibles et dans lequel l'étape (d) comprend :
(d1) le premier dispositif de commande qui sélectionne une adresse de réseau disponible dans la liste d'adresses de réseaux disponibles et
(d2) la transmission de l'adresse de réseau disponible sélectionnée avec le message demandant le changement de l'adresse attribuée.

7. Procédé selon la revendication 6, comprenant en outre l'étape (e) où le premier noeud utilise l'adresse de réseau sélectionnée et diffuse un message d'annonce à ses noeuds voisins, ledit message d'annonce comprenant l'adresse de réseau sélectionnée.

8. Procédé selon la revendication 6 ou 7, dans lequel chaque dispositif de commande comprend respectivement une liste d'adresses disponibles.

9. Procédé selon l'une quelconque des revendications 6 à 8, dans lequel l'étape (d) comprend en outre (d3) le premier dispositif de commande qui vérifie si le nombre d'adresses de réseaux disponibles restantes dans la liste d'adresses de réseaux disponibles se situe en dessous d'un seuil et demande au réseau une nouvelle liste d'adresses disponibles.

10. Dispositif de commande pour coupler un sous-réseau à une ossature, le sous-réseau étant l'un d'une pluralité de sous-réseaux en lesquels un réseau est subdivisé et l'ossature configurée pour interconnecter la pluralité de sous-réseaux, le dispositif de commande étant configuré pour :
- recevoir un message d'annonce d'un premier noeud du sous-réseau, en attribuant au premier noeud une adresse stochastique,
- vérifier si l'adresse de réseau attribuée est disponible en vérifiant dans une liste de dispositifs de commande d'adresses déjà utilisées si l'adresse de réseau attribuée est incluse dans cette liste de dispositifs de commande et, si l'on n'arrive pas à trouver l'adresse de réseau attribuée dans la liste de dispositifs de commande, soumettre l'adresse de réseau à d'autres dispositifs de commande raccordés à l'ossature et,
- lorsque l'on détecte que l'adresse de réseau attribuée n'est pas disponible, transmettre un message demandant le changement de l'adresse attribuée.

11. Sous-réseau comprenant une pluralité de noeuds et au moins un dispositif de commande selon la revendication 10.

12. Réseau comprenant une pluralité de sous-réseaux selon la revendication 11, interconnectés au moyen d'une ossature.
